(19) Europäisches Patentamt
European Patent Office
Office européen des brevets

(11) Veröffentlichungsnummer : **0 175 874**
**B1**

(12) # EUROPÄISCHE PATENTSCHRIFT

(45) Veröffentlichungstag der Patentschrift : **09.09.87**

(51) Int. Cl.⁴ : **C 08 G 59/50**, C 09 D 5/03

(21) Anmeldenummer : **85109264.3**

(22) Anmeldetag : **24.07.85**

(54) **Carboxylgruppenhaltige Härter.**

(30) Priorität : **22.09.84 DE 3434917**

(43) Veröffentlichungstag der Anmeldung : **02.04.86 Patentblatt 86/14**

(45) Bekanntmachung des Hinweises auf die Patenterteilung : **09.09.87 Patentblatt 87/37**

(84) Benannte Vertragsstaaten : **AT BE CH DE FR GB IT LI NL SE**

(56) Entgegenhaltungen :
**EP-A- 0 000 418**
**EP-A- 0 123 797**
**DE-A- 3 026 456**
**DE-B- 2 324 696**

(73) Patentinhaber : **HÜLS AKTIENGESELLSCHAFT**
**- RSP Patente / PB 15 - Postfach 13 20**
**D-4370 Marl 1 (DE)**

(72) Erfinder : **Olbrich, Jürgen, Dr.**
**Am Gecksbach 64**
**D-4270 Dorsten 11 (DE)**
Erfinder : **Biethan, Uwe, Dr.**
**Rheinische Strasse 13**
**D-4370 Marl (DE)**
Erfinder : **Sorge, Gernold**
**Hofsteder Strasse 31**
**D-4690 Herne (DE)**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 175 874 B1

Jouve, 18, rue St-Denis, 75001 Paris, France

**Beschreibung**

Gegenstand der Erfindung sind carboxylgruppenhaltige Härter erhalten durch Neutralisation von einer Polycarbonsäure mit einem cyclischen Amidin für pulverförmige Überzugsmittel auf der Basis von Epoxiharzen als Bindemittel.

Insbesondere im Industrielacksektor besteht ein großer Bedarf an Pulverlacken zur Herstellung matter Überzüge. Die Gründe hierfür sind überwiegend praktischer Art. Strukturierte bzw. matte Oberflächen erfordern ein weitaus geringeres Maß an Reinigung als glänzende Oberflächen. Darüber hinaus ist es aus sicherheitstechnischen Gründen notwendig, stark reflektierende Oberflächen zu vermeiden.

Um den gewünschten Effekt zu erreichen, sind eine Reihe von Maßnahmen bekannt geworden. Für die Herstellung von matten Überzügen auf Basis von Epoxiharzen als Bindemittel hat sich die Verwendung von speziellen Härtern als eine günstige Arbeitsweise (DE-B-23 24 696) herausgestellt. Nachteil des hier beschriebenen Verfahrens sind relativ hohe Härtungstemperaturen (180 bis 210 °C) bei der Anwendung in der Praxis.

Aufgabe der vorliegenden Erfindung war es, unter Vermeidung der Nachteile des Standes der Technik Härter für pulverförmige Überzugsmittel zu entwickeln, die eine Härtung bereits bei tieferen Temperaturen ermöglichen. Wesentlich bei der Lösung der Aufgabe war es, daß sich die lacktechnischen Eigenschaften der Überzüge dabei zumindest nicht verschlechtern.

Diese Aufgabe wurde durch einen Härter gelöst, indem ein carboxylgruppenhaltiger Oligoester mit einer Säurezahl im Bereich von 245 bis 265 mit einem oder mehreren cyclischen Amidinen in bekannter Weise imgesetzt worden ist, wobei > 25 bis 90 % der freien Carboxylgruppen neutralisiert worden sind.

Zur Herstellung der Oligoester werden aliphatische, cycloaliphatische oder aromatische monomolekulare Di- oder Polycarbonsäuren einerseits und aliphatische oder cycloaliphatische Diole andererseits eingesetzt. Die Carbonsäuren bzw. Diole enthalten 4 bis 18 C-Atome. Im Falle der Diole kann ein Kohlenstoffatom ggf. auch durch ein Sauerstoffatom ersetzt sein. Bedingung hierfür ist, daß ein solches Sauerstoffatom durch mindestens 2 Kohlenstoffatome von der Hydroxylgruppe und/oder von einem weiteren Sauerstoffatom in der Kette getrennt ist.

Als Dicarbonsäuren kommen z. B. infrage Bernsteinsäure, Glutarsäure, Adipinsäure, Trimethyladipinsäure, Azelainsäure, Sebazinsäure, Decandicarbonsäure, Dodecandicarbonsäure, Fumarsäure, Maleinsäure und Isophthalsäure. Als Polycarbonsäure werden z. B. Benzol-1.3.5-tricarbonsäure, Benzol-1.2.4-tricarbonsäure, Benzol-1.2.3-tricarbonsäure, Naphthalin-1.5-dicarbonsäure, Benzophenon-4.4'-dicarbonsäure, Butantetracarbonsäure, Cyclopentantetracarbonsäure, Pyromellitsäure, Benzol-1.2.3.4-tetracarbonsäure, Benzol-1.2.3.5-tetracarbonsäure und 3.4-Dicarboxy-1.2.3.4-tetrahydronaphthalin-1-bernsteinsäure eingesetzt.

Als Diole kommen z. B. 1.3-, 1.4- oder 2.3-Butandiol, 1.5-Pentandiol, 2.2-Dimethyl-1.3-propandiol, 1.6- und 2.5-Hexandiol, 1.12-Dodecandiol infrage.

Die carboxylgruppenhaltigen Oligoester besitzen eine Säurezahl von 245 bis 265, insbesondere 250 bis 260. Die Erweichungspunkte liegen im allgemeinen im Bereich von 40 bis 110 °C, vorzugsweise im Bereich von 60 bis 90 °C. Ihre mittlere Molmasse liegt unterhalb 2 500. (Die Molmasse wird mit Hilfe von Verfahren der Ausschlußchromatografie bestimmt).

Die Herstellung der Oligoester ist bekannt (Sorensen u. Campbell- « Preparative Methods of Polymer Chemistry », Interscience Publishers Inc., New York, 1961, S. 111-127). Im allgemeinen erfolgt die Herstellung bei Temperaturen bis 200 °C nach der üblichen Schmelzkondensation. Der Reaktionsverlauf kann dabei durch Titration der überschüssigen Carboxylgruppen verfolgt werden, so daß das Ende der Reaktion leicht bestimmt werden kann.

Zur Neutralisation der carboxylgruppenhaltigen Oligo-ester werden cyclische Amidine eingesetzt. Als cyclische Amidine eignen sich insbesondere Imidazoline oder Tetrahydropyrimidine.

Als Imidazoline werden Verbindungen der allgemeinen Formel

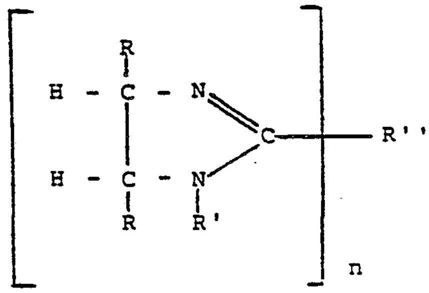

(A)

verwendet, in der

R unabhängig voneinander ein Wasserstoffatom, einen Alkylrest mit 1 bis 6 C-Atomen, einen Cycloalkylrest mit 5 bis 10 C-Atomen, einen Aralkylrest mit 7 bis 12 C-Atomen, einen Arylrest mit 6 bis 15

C-Atomen oder einen heterocyclischen Rest mit 5 bis 10 C-Atomen und 1 bis 2 Sauerstoff-, Stickstoff- und/oder Schwefel-atomen,

R′ ein Wasserstoffatom, ein Alkyl- oder Arylrest (wie unter R definiert), ein Cycloalkylrest mit 5 bis 10 C-Atomen oder ein heterocyclischer Rest mit 5 bis 10 C-Atomen und 1 bis 2 Sauerstoff-, Stickstoff- und/oder Schwefelatomen,

R″ einen Alkylenrest mit 1 bis 6 C-Atomen oder einen Arylenrest mit 6 bis 15 C-Atomen, wobei diese jeweils durch Alkyl-, Cycloalkyl- oder Arylreste (wie für R bzw. R′ definiert) substituiert sein können,

n 1 oder 2

bedeuten und für den Fall n = 1 auch ein Wasserstoffatom bedeuten kann.

Bevorzugte Imidazoline der allgemeinen Formel (A) sind z. B. 2-Phenylimidazolin, 2-Phenyl-4-methyl-imidazolin, 2-(m-Tolyl)-4-methyl-imidazolin, 2-(m-Pyridyl)-imidazolin, 1,4-Tetramethylen-bis-(4-methyl-imidazolin), 2-Methyl-imidazolin, 2,4-Dimethyl-imidazolin, 2-Ethyl-imidazolin, 2-Ethyl-4-methyl-imidazolin, 2-Benzyl-imidazolin, 2-(o-Tolyl)-imidazolin, 2-(p-Tolyl)-imidazolin, Tetramethylen-bis-(imidazolin), 1,1,3-Trimethyl-1,4-tetramethylen-bis-imidazolin, 1,1,3-Trimethyl-1,4-tetramethylen-bis-(4-methyl-imidazolin), 1,3,3-Trimethyl-1,4-tetramethylen-bis-(4-methyl-imidazolin), 1,2-Phenylen-bis-imidazolin, 1,3-Phenylen-bis-(4-methyl-imidazolin). Es können auch Gemische der Imidazolin-Derivate eingesetzt werden ; besonders bevorzugt werden 2-Phenyl-imidazolin und 2-Methyl-imidazolin.

Es können auch Gemische der genannten Imidazoline eingesetzt werden.

Als cyclische Amidine können auch Tetrahydropyrimidine der allgemeinen Formel

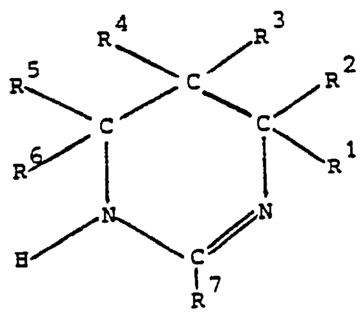

(B)

eingesetzt werden, in der

$R^1$ bis $R^7$ unabhängig voneinander ein Wasserstoffatom, einen Alkylrest mit 1 bis 6 C-Atomen, einen Cycloalkylrest mit 5 bis 10 C-Atomen, einen Aralkylrest mit 7 bis 12 C-Atomen und einen Arylrest mit 6 bis 15 C-Atomen bedeuten, wobei auch zwei geminale und vicinale Substituenten zusammen mit dem Kohlenstoffatom, an dem sie sitzen, einen cycloaliphatischen Ring mit 5 bis 6 C-Atomen bilden können.

Bevorzugte Tetrahydropyrimidine sind z. B. 2-Methyl-tetrahydropyrimidin, 2.4-, 2.5- und 2.6-Dimethyltetrahydropyrimidin, 2-Ethyltetrahydropyrimidin, 2-Ethyl-4-methyl-tetrahydropyrimidin, 2-Benzyltetrahydropyrimidin, 2-Phenyl-tetrahydropyrimidin, 2-Phenyl-4-methyl-, -5-methyl- und -6-methyl-tetrahydropyrimidin, 2.4-Diaza-3-phenyl-7.9.9- und -7.7.9-trimethyl-bicyclo (4.3.0)-nonen-2, 2.4-Diaza-3-methyl-7-9.9- und 7.7.9-trimethylbicyclo (4.3.0)-nonen-2 sowie Gemische dieser Tetrahydropyrimidine.

Die Herstellung der erfindungsgemäßen Härter erfolgt durch Umsetzen des carboxylgruppenhaltigen Oligoesters mit dem cyclischen Amidin. Das Mischungsverhältnis der beiden Komponenten wird so gewählt, daß mehr als 25 bis 90 %, vorzugsweise 28 bis 50 %, der freien Carboxylgruppen des Oligoesters neutralisiert werden.

Die Umsetzung kann z. B. bei 120 °C in der Schmelze oder durch Coextrusion der Komponenten erfolgen. Das Umsetzungsverfahren als solches ist bekannt und wird nicht beansprucht.

Die einsetzbaren Epoxiharze weisen im allgemeinen durchschnittlich mehr als eine Epoxidgruppe pro Molekül auf. Sie haben einen Schmelzpunkt über 40 °C. Die Epoxiharze können sowohl gesättigt als auch ungesättigt, aliphatisch, cycloaliphatisch, araliphatisch oder heterocyclisch sein. Im einzelnen handelt es sich um

— Epoxide mehrfach ungesättigter Kohlenwasserstoffe, wie z. B. Vinylcyclohexen, Dicyclopentadien, Cyclohexadien-(1.3) und -(1.4), Cyclododecadiene und -triene, Isopren, Hexadien-(1.5), Butadien, Polybutadiene, Divinylbenzole,

— Epoxiether mehrwertiger Alkohole, wie z. B. Ethylen-, Propylen- und Butylenglykol, Glycerin, Pentaerythrit, Sorbit, Polyvinylalkohole und Thiodiglykole,

— Expoxiether mehrwertiger Phenole, wie Resorcin, Hydrochinon, Bis-(4-hydroxyphenol/-methan, Bis-(4-hydroxy-3.5-dichlorphenyl)-methan, 1.1-Bis-(4-hydroxyphenyl)-ethan, 2.2-Bis-(4-hydroxyphenyl)-propan, 2.2-Bis-(4-hydroxy-3-methylphenyl)-propan, 2.2-Bis-(4-hydroxy-3.5.5-trichlorphenyl)-propan, Bis-(4-hydroxyphenyl)-phenylmethan, Bis-(4-hydroxyphenyl)-diphenylmethan, Bis-(4-hydroxyphenyl/-cyclohexylmethan, 4.4′-Dihydroxydiphenyl, 2.2′-Dihydroxydiphenyl,

— N-haltige Epoxide, wie N.N-Diglycidylanilin, N.N′-Dimethyldiglycidyl-4.4′-diaminodiphenylmethan, Triglycidylisocyanurat.

Als besonders geeignet haben sich Epoxide auf Bisphenol A-Basis mit einem Epoxid-Äquivalent von 500 bis 2 000 und einem Schmelpunkt von 70 bis 140 °C erwiesen.

Bei der Herstellung der pulverförmigen Überzugsmittel können weiterhin übliche Zusätze, wie Verlaufmittel, Pigmente, Farbstoffe, Füllstoffe, Katalysatoren, Thixotropiermittel, UV- und Oxidationsstabilisatoren, Verwendung finden. Die Menge dieser Zusätze kann, bezogen auf die Menge des Bindemittels, innerhalb eines weiten Bereichs schwanken.

Die Herstellung der Überzugsmittel erfolgt beispielsweise in der Weise, daß man die einzelnen Komponenten (Epoxiharze, Härter und ggf. Zusätze) mahlt, mischt und bei 90 bis 110 °C extrudiert. Nach dem Extrudieren wird abgekühlt und auf eine Korngröße kleiner als 100 µm gemahlen.

Die Applikation auf die zu überziehenden Substrate kann nach bekannten Methoden erfolgen, z. B. durch elektrostatisches Pulverspritzen, Wirbelsintern oder elektrostatisches Wirbelsintern. Anschließend wird das aufgetragene Überzugsmittel 35 bis 5 min im Temperaturbereich zwischen 130 bis 220 °C, vorzugsweise 15 bis 30 min zwischen 140 bis 180 °C, ausgehärtet.

Zur Beschichtung mit den erfindungsgemäßen pulverförmigen Überzugsmitteln eignen sich alle Substrate, die bei den angegebenen Härtungstemperaturen beständig, z. B. Metalle, Glas, Keramik oder Kunststoff, sind.

Die mit Hilfe der erfindungsgemäßen Härter hergestellten Überzüge weisen eine gleichmäßige Struktur bzw. einen matten Glanz auf. Gemäß der Bestimmungsmethode nach Gardner (60 °) können Glanzgrade im Bereich von 12 bis 85 eingestellt werden. In unerwarteter Weise bleiben andere lacktechnische Eigenschaften auf hohem Niveau.

Die lacktechnischen Eigenschaften wurden mit Hilfe der nachstehenden Prüfmethoden bestimmt :

Tiefung nach Erichsen in mm (DIN 53 156)
Impact Test (ASTM D 27/94/69)
Gitterschnittprüfung (DIN 53 151)
Glanzgrad nach Gardner bei 60° (ASTM D 523)

## Beispiele

Herstellung der Überzugsmittel

Die verwendeten Epoxiharze wurden mit den erfindungsgemäßen Härtern, den Pigmenten und den Zusatzstoffen, wie z. B. Verlaufmittel, in den unten angegebenen Gewichtsverhältnissen gemischt, extrudiert und anschließend gemahlen. Der Teilchendurchmesser der Pulverlackbestandteile lag bei < 100 µ. Die Häufigkeitsverteilung der Teilchendurchmesser besaß im Bereich von 30 bis 50 µ ein Maximum. Diese Überzugsmittel wurden durch elektrostatisches Pulverspritzen auf entfettete Stahlbleche (1 mm) aufgebracht und anschließend bei den angegebenen Temperaturen und Zeiten ausgehärtet. Die Eigenschaften der erhaltenen Überzüge wurden den nachstehenden Prüfungen unterworfen.

### Beispiel 1

Aus 0.5 Mol Hexandiol-(1.6), 1.5 Molen Neopentylglykol, 1.8 Molen Phthalsäureanhydrid und 1.2 Molen Trimellitsäureanhydrid wurde bei 200 °C durch Schmelzkondensation ein Oligoester mit einer Säurezahl von 257 und einem Erweichungspunkt von 67 °C hergestellt. Dieser Oligoester wurde dann innerhalb 1 h mit 1 Mol 2-Phenylimidazolin bei 120 °C in der Schmelze umgesetzt.

Der Härter wurde mit Titandioxid, Epoxiharz und Verlaufmittel in nachstehendem Verhältnis zu einem pulverförmigen Überzugsmittel verarbeitet. Das erhaltene Überzugsmittel wird, wie oben beschrieben, auf Stahlbleche appliziert.

11.0 Gew.-% Härter
47.8 Gew.-% Epoxiharz (DER 663 u)
40.0 Gew.-% $TiO_2$
1.0 Gew.-% Fließmittel auf Polyacrylat-Basis (MODAFLOW®)
0.2 Gew.-% Benzoin

Die Versuchsergebnisse können der Tabelle 1 entnommen werden.

### Beispiel 2

Entsprechend Beispiel 1 wurde ein Oligoester hergestellt und anschließend bei 120 °C im Extruder (Buss-Cokneter) mit 1 Mol 2-Phenylimidazolin umgesetzt.

Die Herstellung und Verarbeitung des pulverförmigen Überzugsmittels erfolgte analog Beispiel 1.
Die Versuchsergebnisse können der Tabelle 2 entnommen werden.

### Beispiel 3

Entsprechend Beispiel 1 wurde ein Oligoester hergestellt und anschließend mit 0.5 Mol 2-Phenylimidazolin bei 120 °C in der Schmelze teilneutralisiert. Der Härter wurde mit Titandioxid, Epoxiharz und Verlaufmittel in nachstehendem Verhältnis zu einem pulverförmigen Überzugsmittel verarbeitet. Das Überzugsmittel wird, wie oben beschrieben, auf Stahlbleche appliziert.

17.4 Gew.-% Härter
41.4 Gew.-% Epoxiharz (DER 663 u)
40.0 Gew.-% $TiO_2$
1.0 Gew.-% Fließmittel auf Polyacrylat-Basis (MODAFLOW®)
0.2 Gew.-% Benzoin

Die Versuchsergebnisse können der Tabelle 3 entnommen werden.

Beispiel 4

Entsprechend Beispiel 1 wurde ein Oligoester hergestellt und anschließend mit 2 Molen 2-Phenylimidazolin bei 120 °C in der Schmelze teilneutralisiert. Dieser Härter wurde mit Titandioxid, Epoxiharz und Verlaufmittel in nachstehendem Verhältnis zu einem pulverförmigen Überzugsmittel verarbeitet. Das Überzugsmittel wird, wie oben beschrieben, auf Stahlbleche appliziert.

6.13 Gew.-% Härter
52.67 Gew.-% Epoxiharz (DER 663 u)
40.00 Gew.-% $TiO_2$
1.00 Gew.-% Fließmittel auf Polyacrylat-Basis (MODAFLOW®)
0.20 Gew.-% Benzoin

Die Versuchsergebnisse können der Tabelle 4 entnommen werden.

Beispiel 5

Aus 0,5 Mol Hydroxypivalinsäureneopentylglykolester, 1.5 Molen Neopentylglykol, 1.5 Molen Phthalsäureanhydrid und 1.5 Molen Trimellitsäureanhydrid wurde bei 200 °C durch Schmelzkondensation ein Oligoester mit einer Säurezahl von 254 und einem Erweichungspunkt von 82.5 °C hergestellt. Dieser Oligoester wurde dann innerhalb 1 h bei 120 °C mit 1 Mol 2-Phenylimidazolin umgesetzt.

Der Härter wurde mit Titandioxid, Epoxiharz und Verlaufmittel in nachstehendem Verhältnis zu einem pulverförmigen Überzugsmittel verarbeitet. Das Überzugsmittel wird, wie oben beschrieben, auf Stahlbleche appliziert.

12.73 Gew.-% Härter
46.07 Gew.-% Epoxiharz (DER 663 u)
40.00 Gew.-% $TiO_2$
1.00 Gew.-% Fließmittel auf Polyacrylat-Basis (MODAFLOW®)
0.20 Gew.-% Benzoin

Die Versuchsergebnisse können der Tabelle 5 entnommen werden.

Tabelle 1

| Versuch | Einbrennbedingungen [min]/[°C] | Schichtdicke [µm] | Tiefung [mm] | Impact Test | Gitterschnitt | Glanz (60°) |
|---|---|---|---|---|---|---|
| 1/I | 20 / 180 | 76 - 78 | 7.4 | 128 | 0 | 25 |
| 1/II | 20 / 160 | 84 - 96 | 7.4 | 116 | 0 | 27 |
| 1/III | 30 / 140 | 64 - 78 | 7.4 | 112 | 0 | 28 |
| 1/IV | 30 / 130 | 58 - 70 | 7.5 | 64 | 0 | 28 |

Tabelle 2

| Versuch | Einbrennbedingungen [min]/[°C] | Schichtdicke [µm] | Tiefung [mm] | Impact Test | Gitterschnitt | Glanz (60°) |
|---|---|---|---|---|---|---|
| 2/I | 20 / 180 | 48 - 62 | 7.7 | > 160 | 0 | 25 |
| 2/II | 20 / 160 | 50 - 58 | 7.9 | > 160 | 0 | 25 |
| 2/III | 30 / 140 | 50 - 54 | 8.4 | 132 | 0 | 27 |
| 2/IV | 30 / 130 | 50 - 52 | 7.8 | 108 | 0 | 28 |

Tabelle 3

| Versuch | Einbrennbedingungen [min]/[°C] | Schichtdicke [µm] | Tiefung [mm] | Impact Test | Gitterschnitt | Glanz (60°) |
|---|---|---|---|---|---|---|
| 3/I | 20 / 180 | 42 - 52 | 8.0 | 116 | 0 - 1 | 64 |
| 3/II | 20 / 160 | 48 - 50 | 7.7 | 120 | 0 - 1 | 62 |
| 3/III | 30 / 140 | 48 - 61 | 7.6 | 100 | 0 | 61 |

Tabelle 4

| Versuch | Einbrennbedingungen [min]/[°C] | Schichtdicke [µm] | Tiefung [mm] | Impact Test | Gitterschnitt | Glanz (60°) |
|---|---|---|---|---|---|---|
| 4/I | 20 / 180 | 50 - 68 | 7.8 | >160 | 0 | 82 |
| 4/II | 20 / 160 | 54 - 68 | 7.9 | >160 | 0 | 84 |
| 4/III | 30 / 140 | 52 - 58 | 8.3 | >160 | 0 | 85 |

Tabelle 5

| Versuch | Einbrennbedingungen [min]/[°C] | Schichtdicke [µm] | Tiefung [mm] | Impact Test | Gitterschnitt | Glanz (60°) |
|---|---|---|---|---|---|---|
| 5/I | 20 / 180 | 66 - 74 | 8.1 | 156 | 0 | 12 |
| 5/II | 20 / 160 | 86 - 90 | 7.8 | 104 | 0 | 13 |
| 5/III | 30 / 140 | 76 - 80 | 8.1 | 112 | 0 | 15 |

**Patentansprüche**

1. Carboxylgruppenhaltiger Härter für pulverförmige Überzugsmittel auf der Basis von Epoxidharzen als Bindemittel, erhalten durch Neutralisation

eines carboxylgruppenhaltigen Oligoesters mit einer Säurezahl im Bereich von 245 bis 265 und einer mittleren Molmasse unterhalb von 2 500 aus (cyclo) aliphatischen oder aromatischen C(4-18) Di- oder Polycarbonsäuren und (cyclo) aliphatischen C(4-18) Diolen, wobei im Falle der Diole ein C-Atom auch durch ein Sauerstoffatom ersetzt sein kann, sofern ein solches Sauerstoffatom durch mindestens 2 C-Atome von der Hydroxylgruppe und/oder einem weiteren Sauerstoffatom in der Kette getrennt ist,

mit einem oder mehreren cyclischen Amidinen in bekannter Weise, wobei > 25 bis 90 % der freien Carboxylgruppen neutralisiert worden sind.

2. Carboxylgruppenhaltiger Härter gemäß Anspruch 1, dadurch gekennzeichnet, daß ein carboxylgruppenhaltiger Oligoester mit einer Ausgangssäurezahl im Bereich von 250 bis 260 eingesetzt worden ist.

3. Carboxylgruppenhaltiger Härter gemäß den Ansprüchen 1 und 2, dadurch gekennzeichnet, daß zur Neutralisation ein ggf. substituiertes Tetrahydropyrimidin eingesetzt worden ist.

4. Carboxylgruppenhaltiger Härter gemäß den Ansprüchen 1 bis 3, dadurch gekennzeichnet, daß 28 bis 50 % der freien Carboxylgruppen des Oligoesters neutralisiert worden sind.

**Claims**

1. A hardener containing carboxyl groups for use in pulverulent coating compositions based on epoxy resins as binding agents, the hardener being obtained by neutralisation of

an oligoester containing carboxyl groups and having an acid number in the range from 245 to 265 and an average molecular weight less than 2 500, the oligoester being an ester of one or more (cyclo)-aliphatic or aromatic $C_4$-$C_{18}$ di- or poly-carboxylic acids and one or more (cyclo) aliphatic $C_4$-$C_{18}$ diols, a carbon atom of the diol(s) being optionally replaceable by an oxygen atom provided that such an oxygen atom is separated from the hydroxy groups or any other oxygen atom in the chain or both by at least 2 carbon atoms,

with one or more cyclic amidines in a known manner such that more than 25 % up to 90 % of the free carboxyl groups are neutralised.

2. A hardener containing carboxyl groups according to claim 1, characterised in that an oligoester containing carboxyl groups and having an initial acid number in the range from 250 to 260 has been used.

3. A hardener containing carboxyl groups according to claim 1 or 2, characterised in that an optionally substituted tetrahydropyrimidine has been used for the neutralisation.

4. A hardener containing carboxyl groups according to any of claims 1 to 3, characterised in that 28 to 50 % of the free carboxyl groups of the oligoester have been neutralised.

**Revendications**

1. Durcisseur contenant des groupes carboxyle pour agents de revêtement pulvérulents à base de résines d'époxyde comme liant, obtenu par neutralisation

d'un oligo-ester contenant des groupes carboxyle, ayant un indice d'acide de la gamme de 245 à 265 et une masse moléculaire moyenne inférieure à 2 500, tiré d'acides di- ou polycarboxyliques (cyclo) aliphatiques ou aromatiques en $C_4$ à $C_{18}$ et de diols (cyclo) aliphatiques en $C_4$ à $C_{18}$, un atome de carbone pouvant aussi, dans le cas des diols, être remplacé par un atome d'oxygène, dans la mesure où un tel atome d'oxygène est séparé du groupe hydroxyle et/ou d'un autre atome d'oxygène dans la chaîne par au moins 2 atomes de carbone,

avec une ou plusieurs amidines cycliques de manière connue, au moins 25 à 90 % des groupes carboxyle libres ayant été neutralisés.

2. Durcisseur contenant des groupes carboxyle selon la revendication 1, caractérisé par le fait que l'on a utilisé un oligo-ester contenant des groupes carboxyle, ayant un indice d'acide initial de la gamme de 250 à 260.

3. Durcisseur contenant des groupes carboxyle selon les revendications 1 et 2, caractérisé par le fait que pour la neutralisation, on a utilisé une tétrahydropyrimidine éventuellement substituée.

4. Durcisseur contenant des groupes carboxyle selon les revendications 1 à 3, caractérisé par le fait que 28 à 50 % des groupes carboxyle libres de l'oligo-ester ont été neutralisés.